# EUROPEAN PATENT SPECIFICATION

(11) **EP 4 503 296 B1**
(45) Date of publication and mention of the grant of the patent: **10.06.2026**
(21) Application number: 23839917.4
(22) Date of filing: 11.07.2023
(51) Int. Cl.: H01M 50/30, H01M 50/35, H01M 50/383, H01M 50/249, H01M 50/204

(54) **BATTERY PACK AND DEVICE COMPRISING THE SAME**
BATTERIEPACK UND VORRICHTUNG DAMIT
BLOC-BATTERIE ET DISPOSITIF LE COMPRENANT

(30) Priority: 11.07.2022 KR 20220084941; 10.07.2023 KR 20230089362
(43) Date of publication of application: 05.02.2025
(73) Proprietor: LG Energy Solution, Ltd., Seoul 07335 (KR)
(72) Inventor: KIM, Seung Joon, Daejeon 34122 (KR); KIM, Kyungwoo, Daejeon 34122 (KR); HWANG, Ji Soo, Daejeon 34122 (KR); KANG, Jongmo, Daejeon 34122 (KR); CHI, Ho June, Daejeon 34122 (KR)
(74) Representative: Plasseraud IP
(86) International application number: PCT/KR2023/009820
(87) International publication number: WO 2024/014825

(56) References cited:
- EP-A1- 4 311 002
- EP-A1- 4 401 217
- CN-A- 112 751 121
- JP-A- 2007 323 819
- JP-A- 2021 093 296
- KR-A- 20190 036 260
- KR-A- 20220 092 323
- KR-B1- 102 061 872
- US-A1- 2021 313 650

## Description

### [TECHNICAL FIELD]

### Cross Citation with Related Application(s)

This application claims priority benefit of Korean Patent Application No. 10-2022-0084941, filed on July 11, 2022, and Korean Patent Application No. 10-2023-0089362, filed on July 10, 2023.

The present disclosure relates to a battery pack and a device including the same, and more particularly, to a battery pack that can prevent external ignition phenomena and prevent the clogging of the vent flow path, and a device including the same.

### [BACKGROUND]

In modern society, as portable devices such as a mobile phone, a notebook computer, a camcorder and a digital camera have been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, being freely charged and discharged, and having very low self-discharge rate and high energy density.

Meanwhile, in the case of a secondary battery used for small-sized devices, two to three battery cells are used, but in the case of a secondary battery used for a medium- and large-sized device such as automobiles, a medium- or large-sized battery module in which a large number of battery cells are electrically connected is used.

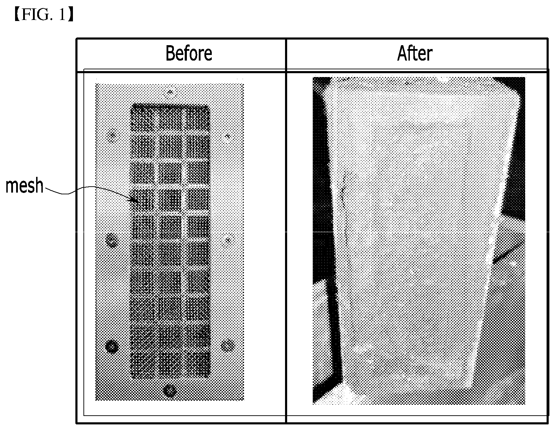

Fig. 1 is a diagram showing the state before and after an ignition phenomenon of a mesh formed in a conventional battery pack.

Battery cells mounted on a battery module or a battery pack may generate a large amount of heat during charging and discharging process, and if the temperature is higher than the proper temperature due to reasons such as overcharging, the performance may deteriorate, and excessive temperature rise may cause explosion or ignition. When the battery cell ignites, the internal materials of the cell may be blown off along with high-temperature flammable gas to the outside of the battery module or battery pack. Such internal materials are mainly materials such as C, Cu, Al, Ni, Co, Mg, and Li, and are blown off in the form of high-temperature dusts, i.e., sparks.

On the other hand, such sparks not only promote cascading thermal runaway phenomena within the battery module or battery pack, but also have the problem of causing external ignition phenomena by contacting with flammable gas or external oxygen when discharged to the outside. Therefore, in recent years, attempts have been made to form a mesh on the frame of a battery module or battery pack to minimize the release of dust.

However, even if a mesh is formed on the frame, the release of internal gas is restricted if dust closes the opening of the mesh as shown in Fig. 1, whereby the internal pressure of the battery module or pack increases rapidly, which can lead to explosions and frame damage. Therefore, there is a need for an effective frame structure that limits sparks from being released to the outside of the frame. Example of background art can be found in JP 2021 093296 A.

### [DETAILED DESCRIPTION OF THE INVENTION]

### [Technical Problem]

It is an object of the present disclosure to provide a battery pack having improved durability and safety by preventing external ignition phenomena caused by sparks, and a device including the same.

### [Technical Solution]

According to the present invention, a battery pack is provided, comprising: at least one battery module including a plurality of battery cell stacks; a pack frame that houses the battery module; a vent flow path through which gas containing dust generated from the battery module moves; and a final filter that filters the dust before the gas containing the dust is discharged to the outside of the battery pack, wherein the battery pack further comprises a primary filter that is provided at a point where the direction of the vent flow path changes, and primarily filters the dust before the final filter.

The primary filter is arranged apart from the inner surface of the vent flow path.

A first surface of the primary filter may face a first flow path through which the gas flows into the primary filter, and a second surface of the primary filter may face a second flow path through which the gas flows out of the primary filter.

The orientation of the first surface of the primary filter may be parallel to the direction of the first flow path through which the gas flows into the primary filter, and the orientation of the second surface of the primary filter may be parallel to the direction of the second flow path through which the gas flows out of the primary filter.

The primary filter comprises at least one plate-shaped filter, wherein the flat surface of the plate-shaped filter may face a first flow path through which the gas flows into the primary filter, and an edge part of the plate-shaped filter may face a second flow path through which the gas flows out of the primary filter.

The primary filter may comprise a plurality of plate-shaped filters arranged in parallel.

The first filter arranged closest to the first flow path may be in a most loosening non-dense state, and the plurality of plate-shaped filters may consist of filters that become gradually dense in the order in which they are arranged.

The primary filter comprises 'n' number of filters arranged in parallel, and the first filter closest to the first flow path may be coarsest, and the kth filter may be denser than the k-1st filter, wherein k is a natural number from 1 to n.

The plurality of plate-shaped filters each comprises an opening part, and the opening parts of mutually adjacent primary filters may be arranged to cross each other.

The primary filter may consist of a mesh structure.

The primary filter may consist of a wavy mesh structure, and the dust may be filtered at the wavy bent part.

The primary filter may be a resin filter having a porous structure.

The vent flow path may be integrated into the interior of the pack frame.

The primary filter may be provided at a corner part of the pack frame.

The primary filter may have a concave structure between both ends, in which both ends protrude toward the first flow path through which the gas flows into the primary filter, and may have an open structure when viewed from the second flow path through which the gas flows out of the primary filter.

The primary filter has a U-shaped or V-shaped cross section when viewed from the second flow path.

The primary filter may be provided in plural numbers along a direction perpendicular to each of the first flow path and the second flow path.

The battery pack may further comprise a first support member that protrudes toward the first flow path so as to support at least both ends of the primary filter.

The battery pack may further comprise a second support member that connects the first support members provided in at least both ends of the primary filter.

According to another embodiment of the present disclosure, there is provided a device comprising at least one battery pack described above.

### [Advantageous Effects]

According to the embodiments, the battery pack of the present disclosure is provided with a primary filter, which can thus more effectively prevent dust from being released to the outside of the battery pack and also can prevent the clogging of the venting flow path.

The effects of the present disclosure are not limited to the effects mentioned above, and additional other effects not mentioned above will be clearly understood from the description of claims by those skilled in the art.

### [BRIEF DESCRIPTION OF THE DRAWINGS]

Fig. 1 is a diagram showing the state before and after an ignition phenomenon of a mesh formed in a conventional battery pack;
Fig. 2 is a perspective view of a battery pack according to an embodiment of the present disclosure;
Fig. 3 is a perspective view of a battery module included in the battery pack according to Fig. 2;
Fig. 4 is a top view of the battery pack according to Fig. 2;
Fig. 5 shows an embodiment of the present disclosure, and is a partial cross-sectional view enlarging and showing a portion where the primary filter is provided in the battery pack shown in Fig. 4;
Fig. 6 shows another embodiment of the present disclosure in which the primary filter of Fig. 5 is modified;
Fig. 7 is a perspective view of one embodiment of the primary filter of Fig. 6;
Fig. 8 is a partial enlarged view of the primary filter of Fig. 7, showing a case where dust is filtered out at a bent part;
Fig. 9 is a perspective view of another embodiment of the primary filter of Fig. 6;
Fig. 10 is a perspective view which enlarges and shows a portion where the direction of the vent flow path in which the primary filter of Fig. 6 is arranged changes;
Fig. 11 shows another embodiment of the primary filter;
Fig. 12 is an enlarged perspective view of the primary filter of Fig. 11; and
Fig. 13 is an enlarged perspective view of the primary filter of Fig. 11 as viewed from a different direction.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, since the size and thickness of each element shown in the accompanying drawing are arbitrarily illustrated for convenience of explanation, it would be obvious that the present disclosure is not necessarily limited to those illustrated in the drawings. In the drawings, the thickness are exaggerated for clearly expressing several layers and regions. In the drawings, for convenience of explanation, the thicknesses of some layer and regions are exaggerated.

Further, it will be understood that when an element such as a layer, film, region, or plate is referred to as being formed or disposed "on" or "above" another element, it should be interpreted as including not only a case where an element such as a layer, film, region, or plate is directly on the other element but also a case where intervening elements are present. In contrast, when an element such as a layer, film, region, or plate is referred to as being formed or disposed "directly on" another element, it may mean that other intervening elements are not present. Further, the word "on" or "above" means disposed on or below a reference portion, and does not necessarily mean being disposed on the upper end of the reference portion toward the opposite direction of gravity. Meanwhile, similar to the case where it is described as being formed or disposed "on" or "above" another part, the case where it is described as being formed or disposed "below" or "under" another part will also be understood with reference to the above-mentioned contents.

Further, since the upper surface/lower surface of a specific member can be determined differently depending on which direction is used as a reference, throughout the description, 'upper surface' or 'lower surface' is defined as meaning two facing surfaces on the z-axis of the corresponding member.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, a battery pack according to an embodiment of the present disclosure will be described.

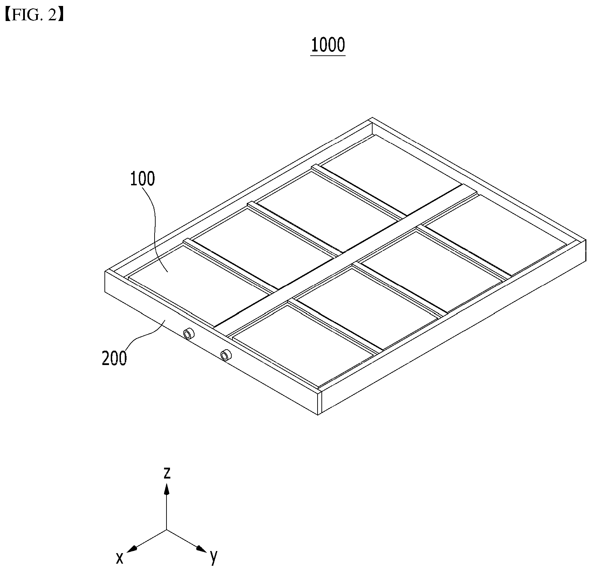

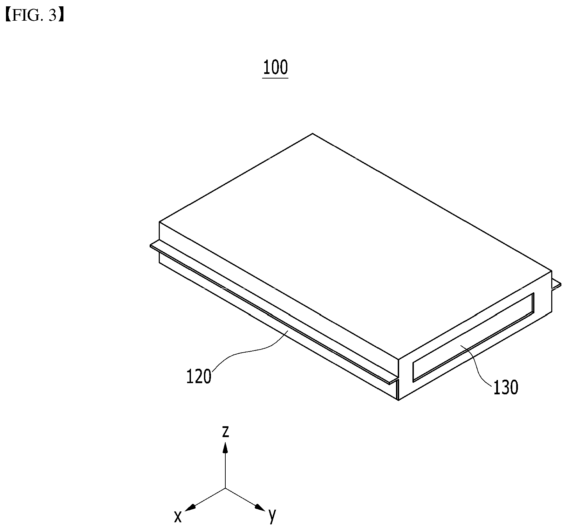

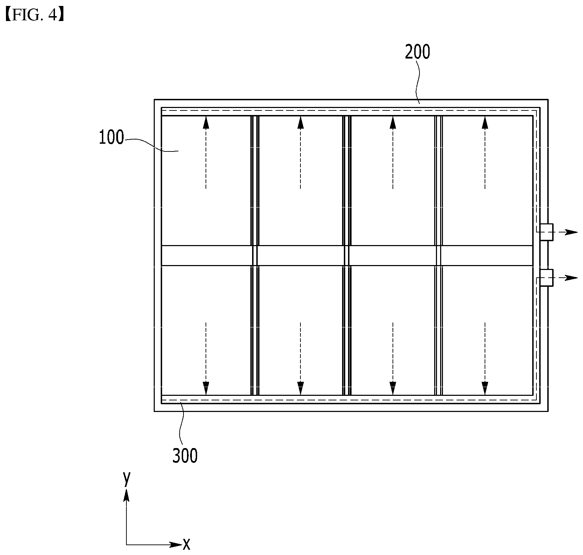

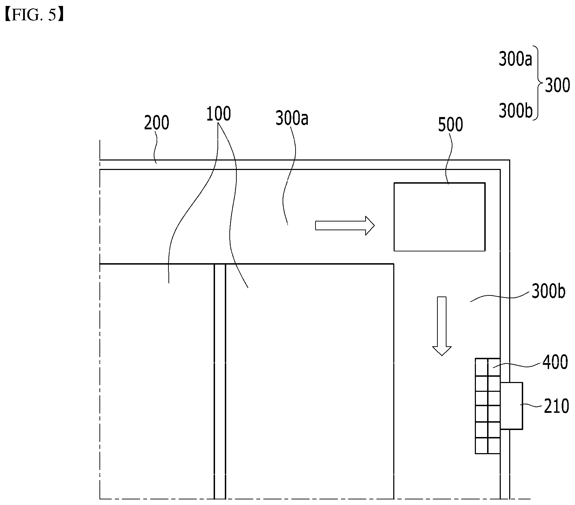

Fig. 2 is a perspective view of a battery pack according to an embodiment of the present disclosure. Fig. 3 is a perspective view of a battery module included in the battery pack according to Fig. 2. Fig. 4 is a top view of the battery pack according to Fig. 2. Fig. 5 is a partial cross-sectional view of the battery pack according to Fig. 2. Fig. 5 may be a cross section of a part of the battery pack taken along the yz plane.

Referring to Figs. 2 to 5, the battery pack 1000 according to an embodiment of the present disclosure may comprise at least one battery module 100, a pack frame 200 that houses at least one battery module 100 and a vent flow path 300 formed between the battery module 100 and the pack frame 200.

The battery module 100 according to the present embodiment may include a battery cell stack constituted by stacking a plurality of battery cells, a module frame 120 that houses the battery cell stack, a busbar frame that is located on a front surface and/or a rear surface of the battery cell stack, a busbar and/or a sensing unit that are mounted on the busbar frame, and the like. However, the components included in the battery module 100 are not limited thereto, and depending on the design, the battery module 100 may be provided in such a state that some of the above components are omitted, or may be provided in such a state that other components not mentioned are added. The type of battery cells included in the battery module 100 is not particularly limited, and pouch-type, prismatic, or jelly-roll type cylindrical battery cells can all be applied.

The module frame 120 may include a metal having high thermal conductivity. Examples of the metal may be aluminum, gold, silver, copper, platinum or an alloy containing them. As the thermal conductivity of the metal is higher, the heat dissipation effect by the module frame improves, so that no specific range for thermal conductivity values is set.

Meanwhile, an opening part 130 may be located on one surface of the module frame 120. When the battery module 100 ignites, the opening part 130 can be for discharging gas, sparks, flame, or the like within the module frame 120. One surface of the module frame 120 on which the opening part 130 is formed may be a surface facing the electrode lead of the battery cell stack, the busbar frame, or the busbar.

The shape of the opening part 130 may be varied, and as an example, it may have an opening shape. As another example, the opening part 130 may be in the form of a plate that is broken at a predetermined pressure or higher, such as a rupture disc. As yet another example, it may be in the form of a valve that can be opened at a predetermined pressure or higher, such as a relief valve.

As shown in Figs. 2 and 4, a plurality of battery modules 100 may be provided in the battery pack 1000. The plurality of battery modules 100 may be arranged in rows and columns within the pack frame 200. Figs. 2 and 4 show a case where a plurality of battery modules 100 are stacked in a lateral direction (x-axis direction of Fig. 4) of the pack frame 200, and a plurality of battery modules 100 are stacked in two rows, but the present disclosure is not limited to those described above, and can be stacked in various arrangements.

The pack frame 200 according to the present embodiment can be for protecting the battery module 100 and electrical components connected thereto from external physical impact. The pack frame 200 may include a lower frame including a lower surface (bottom surface) and a side surface. The battery modules 100 are arranged in the inner space of the lower frame formed from the lower surface and the side surface, and then the upper plate or upper frame is coupled with the edge of the lower frame, thereby capable of sealing the pack frame 200. Here, the upper plate or upper frame may be interpreted as being included in the pack frame 200, but this is not necessarily the case.

The pack frame 200 may include a portion having high thermal conductivity in order to quickly dissipate heat generated in the internal space to the outside. For example, at least a part of the pack frame 200 may be made from a metal having high thermal conductivity, and examples thereof may be aluminum, gold, silver, copper, platinum, an alloy containing these, or the like. Moreover, the pack frame 200 may partially have electrical insulation, and an insulating film may be provided at a position where insulation is required, or an insulating coating may be applied. A portion of the pack frame 200 to which an insulating film or an insulating coating is applied may be referred to as an insulating portion.

The vent flow path 300 may be for discharging gas or the like generated from the battery module 100 to the outside of the battery pack 1000. The vent flow path 300 may be integrated into the interior of the pack frame 200. In this case, the vent flow path 300 may be formed in a separation space between the battery module 100 and the pack frame 200. However, the present disclosure is not limited to those described above, and can be applied even when the vent flow path 300 is provided separately on the outside of the pack frame 200, for example, it is sufficient that the vent flow path 300 has a structure and shape that allows high-temperature gas or the like discharged from the battery module 100 to be discharged to the outside.

The flame, gas, and the like discharged from each of the battery modules 100 to the vent flow path 300 may move along the vent flow path 300 and be discharged to the outside through an outlet port 210 provided at a point at which the vent flow path 300 is completed. The shape of the outlet port 210 may vary. As an example, it may be in the form of an opening provided in the pack frame 200. As another example, the outlet port 210 may be in the form of a valve that can be opened at a predetermined pressure or higher, like a relief valve. The vent flow path 300 may be preferably formed to correspond to all battery modules 100 in the battery pack 1000. For example, as shown in Fig. 4, when the battery modules 100 are arranged in two rows and four columns, the vent flow path 300 may be formed between the battery modules 100 and the pack frame 200 arranged in each row. The flame, gas, and the like discharged from the battery modules 100 can move through the vent flow path 300 along the dotted line arrows and be discharged to the outlet port.

An opening part 130 may be located on one surface of the battery module 100 that contacts the vent flow path 300. The opening part 130 of the battery module 100 may be located toward the vent flow path 300. The battery module 100 may be arranged so that one surface on which the opening part 130 is formed faces the vent flow path 300. As shown in Fig. 4, when the vent flow path 300 is formed along the edge of the pack frame 200, the battery module 100 may be arranged so that the opening part 130 is located toward the pack frame 200. The vent flow path 300 may be formed so as to extend along one surface of the pack frame 200 corresponding to the opening part 130. The gas, flame, and the like discharged through the opening part130 may be discharged into an empty space, and then moved to the vent flow path 300 located on the upper side of the empty space.

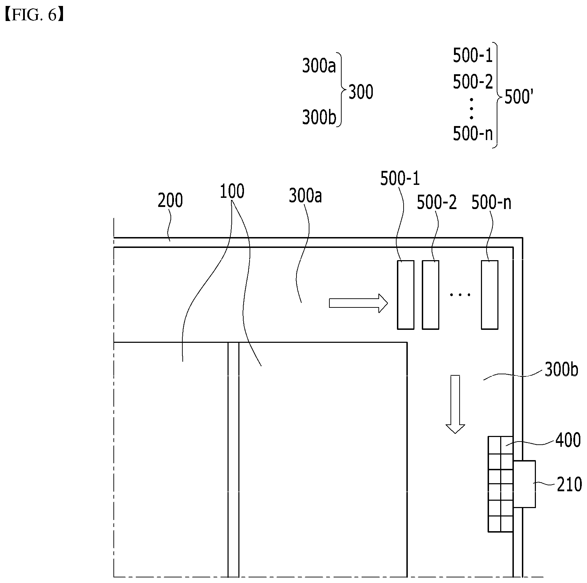

On the other hand, referring to Fig. 6, the vent flow path 300 is provided with a final filter 400. As an example, the final filter 400 may be provided at a point at which the vent flow path 300 is completed, that is, at the front end of the outlet port 210. High-temperature gases, dust, and the like discharged from the battery module 100 pass through a final filter 400 before passing through the vent flow path 300 and then discharging to the outside via the outlet port 210 provided in the pack frame 200. The final filter 400 may be a filter having a mesh structure, or may also be a resin filter, as described in detail below.

The gas discharged from the battery module 100 passes through the final filter 400 and is discharged to the outside of the pack frame 200, and high-temperature dust, i.e., sparks, may be filtered by the final filter 400 and not discharged to the outside. If the release of high-temperature dust, i.e. sparks, is limited by the final filter 400, the possibility of contact of the sparks with external oxygen is reduced, thereby preventing additional ignition from occurring in components adjacent to the battery pack 200.

In addition, a primary filter 500 is further provided in a portion of the vent flow path 300, i.e., between the opening part 130 of the module frame 120 corresponding to the starting point of the vent flow path 300 and the final filter 400. That is, the gas and dust discharged from the battery module 100 may first pass through the primary filter 500 before passing through the final filter 400. Accordingly, because the high-temperature dust discharged from the battery module 100 is primarily filtered in the primary filter 500 and finally filtered once again by the final filter 400, it is possible to more effectively prevent the risk of high-temperature dust being discharged to the outside of the pack frame 200. Moreover, it is also possible to prevent the final filter 400 from clogging due to dust.

According to the present disclosure, the primary filter 500 is located in a portion where the direction of the vent flow path 300 changes. The venting passage 300 includes a first flow path section 300a and a second flow path section 300b. The first flow path section 300a refers to a flow path through which gas and dust discharged from the battery module 100 flow into the primary filter 500, and the second flow path section 300b refers to a flow path through which gas and dust primarily filtered by the primary filter 500 flow out of the primary filter 500.

Fig. 5 shows a case where the first flow path section 300a is arranged in a lateral direction of the pack frame 200 (x-axis direction in Fig. 4), and the second flow path section 300b is arranged in the longitudinal direction of the pack frame 200 (y-axis direction in Fig. 4). In this embodiment of Fig. 5, among the four corners of the pack frame 200 of Fig. 4, they can be arranged at an upper end corner and a lower end corner of the side where the outlet port 210 is located (see circular dotted line portion in Fig. 4).

On the other hand, depending on the stacking direction of the battery module 100, the structure and shape of the vent flow path 300, the positional change of the outlet port 210, or the like, the point where the flow path of the vent flow path 300 changes can be changed or modified, and therefore, it is sufficient that the primary filter 500 is arranged at the point where the flow path of the vent flow path 300 changes, and the present disclosure is not limited to those described above.

Further, according to the present disclosure, in order to prevent the clogging of the vent flow path 300, the primary filter 500 is arranged only in a part of the cross section when viewed from a cross section perpendicular to the moving direction of gas and dust in the vent flow path 300. That is, even if the primary filter 500 is located, the vent flow path 300 has an open structure at a cross sectional view. In other words, the primary filter 500 is arranged apart from the inner surface of the vent flow path 300. For this purpose, the primary filter 500 may be arranged separately by a support member (not shown) mounted on the inner surface of the vent flow path 300. The support member may be a frame or bar-shaped. For example, straight bar may be provided in one or more, or may be provided in a U-shape. The support member is manufactured, for example, by a method of folding or bending a single straight bar or frame, a method of joining multiple straight bars or frames, or a method of molding by die casting or the like. It is sufficient that the support member allows the primary filter 500 to be supported apart from the inner surface of the vent flow path 300, whereas it does not clog the vent flow path 300, and the shape or structure of the support member are not limited.

Even if the primary filter 500 is clogged by accumulating dust in the primary filter 500, the cross section of the vent flow path 300 where the primary filter 500 is located still has an open structure, that is, the vent flow path 300 is not clogged, thereby capable of preventing danger such as explosion of the pack frame 200.

Further, according to the present disclosure, the outer surfaces of the primary filter 500 include a first surface 500a facing the first flow path section 300a and a second surface 500b facing the second flow path section 300b. At this time, the orientation of the first surface 500a of the primary filter 500 may be parallel to a direction in which gas and dust discharged from the battery module 100 flow into the primary filter 500. On the other hand, the other surface of the primary filter 500 faces the second flow path section 300b. That is, the orientation of the other surface of the primary filter 500 may be parallel to a direction in which gas and dust discharged from the battery module 100 flow into the primary filter 500.

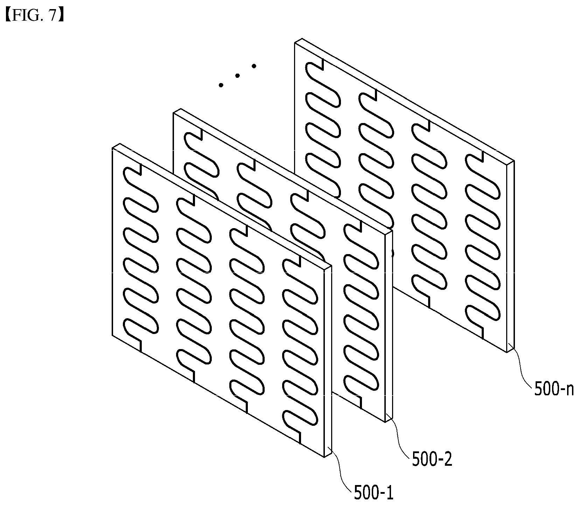

Fig. 6 shows a primary filter 500' according to another embodiment of the present disclosure. In the embodiments of Figs. 6 and 7, the primary filter 500' may be provided with at least one plate-shaped filter 500-1, 500-2, 500-k, ... 500-n (where k is a natural number from 1 to n). That is, the primary filter 500' may be composed of a single plate-shaped filter 500-1, or may be composed of a plurality of plate-shaped filters 500-1, 500-2, 500-k, ... 500-n. A plurality of plate-shaped filters 500-1, 500-2, 500-k, ... 500-n may be arranged parallel to each other.

The plate-shaped filter 500-k also has the first surface 500a and the second surface 500b described above in Fig. 5. For the definitions of the first surface 500a and the second surface 500b, refer to the contents described above in Fig. 5. At this time, the wide flat portion of the plate-shaped filter 500-k is the first surface 500a, and the edge part of the plate-shaped filter 500-k is the second surface 500b. Since the wide flat portion of the plate-shaped filter 500-k faces the first flow path section 300a, dust discharged from the battery module 100 is filtered. On the other hand, when looking at the primary filter 500' from the second flow path section 300b, the edge part of the plate-shaped filter 500-k is viewed, and thus, the primary filter 500' has an open structure. Therefore, even if the filtering function is lost as the primary filter 500' performs some filtering, due to this open structure, the vent flow path 300 is not clogged, and gas and dust discharged from the battery module 100 may flow toward the outlet port 210. On the other hand, the plurality of plate-shaped filters 500-1, 500-2, 500-k, ... 500-n are arranged in order from the filter closest to the first flow path section 300a, that is, the first filter 500-1, to the n-th filter 500-n, the first filter 500-1 may be the most loosening non-dense filter, and the last n-th filter 500-n may be the densest filter. The first filter 500-1, through which gas and dust discharged from the battery module 100 first pass, is formed in a most loosening non-dense state, and the subsequent filters 500-2, ... 500k, ... 500n become denser in order, thereby capable of preventing the risk of clogging the vent flow path 300 with the filtered dusts.

In summary, gas and dust flowing in from the battery module 100 move along the first flow path section 300a and pass through the primary filter 500 located at a point at which the first flow path section 300a is completed. At this time, due to the straight-line nature (inertia) of gas and dust, the dust is filtered by the primary filter 500' while passing through the first filter 500-1, which is in a most loosening non-dense state, and passing through subsequent filters 500-2, ... 500k, ... 500n that gradually become denser in order. On the other hand, because the primary filter 500' is located at the point where the flow path changes, the gas moves to the changed flow path, that is, to the second flow path section 300b. At this time, since the primary filter 500' has an open structure when viewed from the second flow path section 300b, the gas smoothly moves along the second flow path section 300b, and the dust is finally filtered by the final filter 400 at the front end of the outlet port 210, and then is discharged to the outside via the outlet port 210 provided in the pack frame 200.

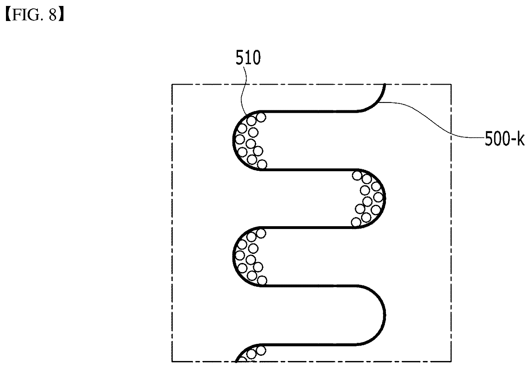

The primary filter 500 may be a filter having a mesh structure. As shown in Fig. 7, the mesh structure may be a wavy mesh structure arranged in a plurality of rows. Alternatively, mesh structures of various shapes can be adopted, such as a structure woven into a square net shape. In the case of a wavy mesh structure, dust is filtered in the bent part 510 (see Fig. 8), and parts other than the bent part are open, so that the gas can move smoothly to the second flow path section 300b without clogging the filter with dust.

The filter having a mesh structure may be made from a metal material. Alternatively, a raw fabric obtained by weaving multifilament fibers such as polyester, nylon, polypropylene, etc. may be coated with a flame-retardant vinyl chloride-based paste resin composition, and then processed into a net shape by heat treatment.

Further, the primary filter 500 may have a structure including a plurality of suction holes therein. In this case, the primary filter 500 may be a resin filter having a porous structure that can filter out fine-sized foreign matter. The resins used for manufacturing the resin filter include those with excellent heat resistance, such as fluorine resin, polyurethane resin, and epoxy resin.

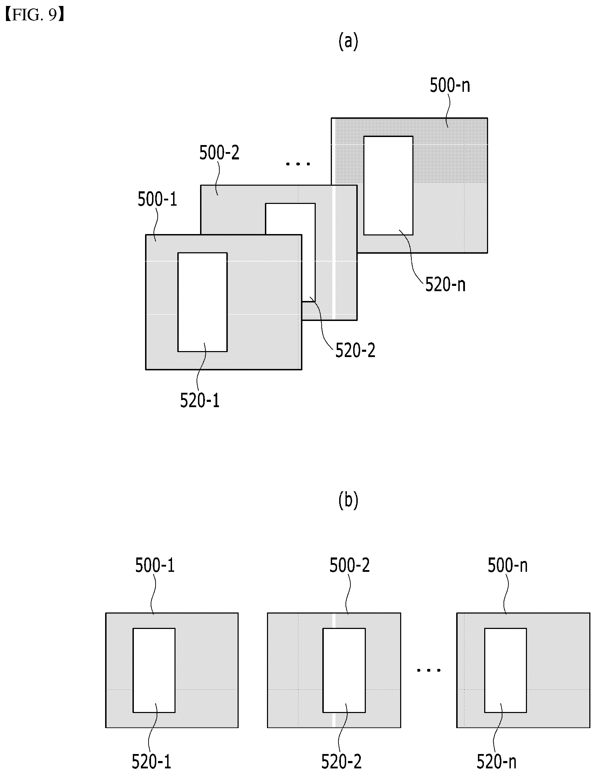

On the other hand, as shown in Fig. 9, the primary filter 500' may include an opening part 520. When looking at the primary filter from the first flow path section 300a, the positions of the opening parts 520-k (where k is a natural number from 1 to n) of the plurality of primary filters 500-k may be arranged so that adjacent primary filters cross each other. Fig. 9(a) is a perspective view, and Fig. 9(b) shows a state where a plurality of primary filters are arranged in a row for convenience of explanation.

Additionally, the primary filter 500' is a modification of the primary filter 500, and may employ a filter having a mesh structure as described above for the primary filter 500, or may have a structure made of a flame-retardant material, which will be described later. That is, the primary filter 500' has a structure in which an opening part 520 is further added to the primary filter 500 as described above.

Meanwhile, the primary filter 500 may be made of a flame-retardant material that is hardly combustible. For example, the flame retardant material may be chlorine-containing vinyl chloride resin, chlorinated paraffin, decabromodiphenyl oxide, antimony trioxide, and the like.

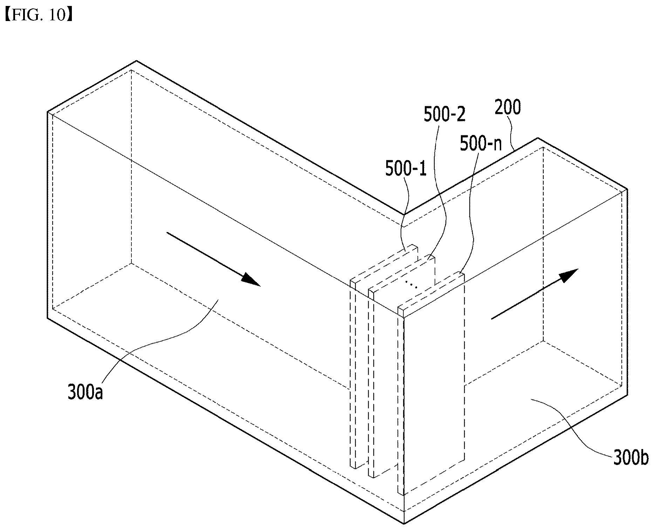

Fig. 10 is a perspective view which enlarges and shows a portion where the direction of the vent flow path in which the primary filter of Fig. 6 is arranged changes. As shown in Figs. 6 and 10, the primary filter 500' is arranged apart from the inner wall of the venting flow path 300 so as not to block the vent flow path 300, and is especially arranged to have an open structure with respect to the second flow path section 300b through which the vent gas escapes.

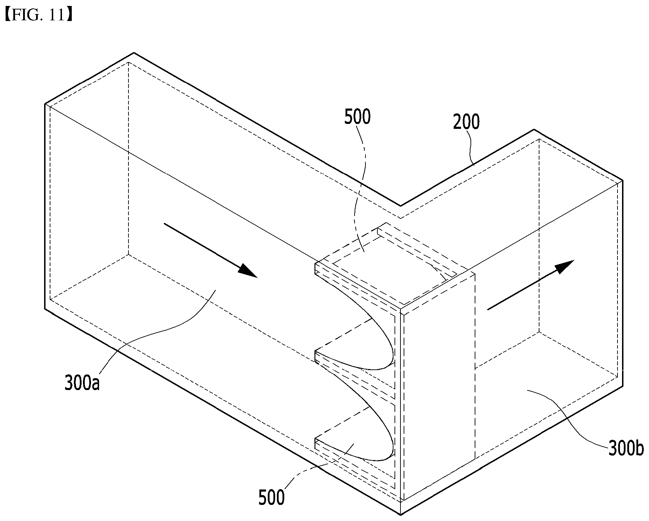

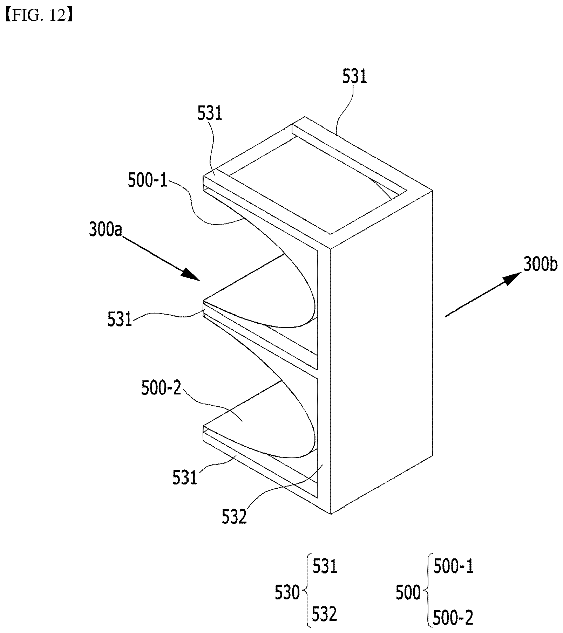

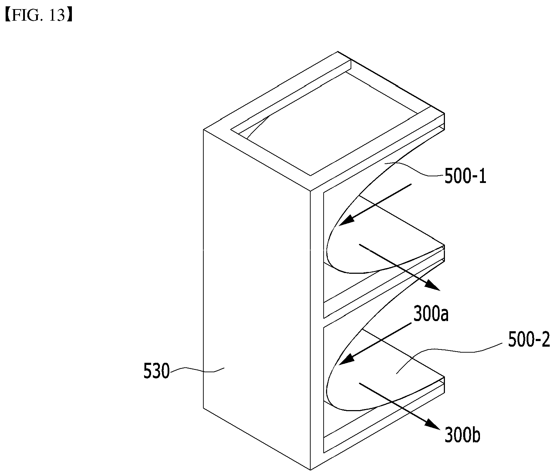

Figs. 11 to 13 show another embodiment of the primary filter. Fig. 11 exemplarily shows a case where the primary filter 500 is located at a portion where the direction of the vent flow path 300 changes. Fig. 12 is an enlarged perspective view of the primary filter 500 of Fig. 11. Fig. 13 is an enlarged perspective view of the primary filter 500 of Fig. 11 as viewed from a different direction. In Figs. 12 and 13, for convenience of understanding, illustration of the frame 200 forming the first flow path section 300a and the second flow path section 300b is omitted.

Referring to Fig. 11, the primary filter 500 is arranged between the first flow path section 300a and the second flow path section 300b in which the direction of the flow path changes. The primary filter 500 is mounted on the support unit 530. The support unit 530 includes a first support member 531 that supports at least both end parts of the primary filter 500. Here, both end parts of the primary filter 500 refer to both end parts in a direction perpendicular to the extension direction of the first flow path section 300a and the extension direction of the second flow path section 300b, respectively. In the illustration of Fig. 11, it means an end part in the height direction of the flow path 300.

The first support member 531 protrudes toward the first flow path section 300a into which vent gas flows. The second support member 532 connects between the first support members 531 provided at both ends of the primary filter 500, respectively. For example, the second support member 532 may extend in the height direction of the flow path 300, and the second support member 532 supports the primary filter 500, for example, in the height direction. The first support member 531 may extend vertically from the second support member 532. Further, the first support member 531 protrudes from both ends (upper end and lower end) of the second support member 532, respectively, and supports both ends (upper end and lower end) of the primary filter 500. On the other hand, the present disclosure is not limited to those illustrated, and various modifications and changes can be made, such as having a structure in which the first support member 531 protrudes from the inner wall of the flow path 300 without the second support member 532.

The primary filter 500 can be made, for example, in a sheet shape, and can be made longer than the height between the first support members 531 that support both ends (upper end and lower end) of the primary filter 500. The primary filter 500 may have a concave structure and shape toward the first flow path section 300a. More specifically, both ends of the primary filter 500 protrude toward the first flow path section 300a, and a concave structure may be formed between the both ends. At this time, when viewed from the second flow path section 300b through which the vent gas flows out, it has an open shape. For example, the cross section seen from the second flow path section 300b may have a U-shape or a V-shape. Accordingly, the primary filter 500 is formed across the first flow path section 300a when viewed from the first flow path section 300a into which the vent gas is drawn, and it becomes an open structure that is not clogged when viewed from the second flow path section 300b.

Accordingly, the vent gas containing dust and the like abuts on the whole area of the primary filter 500 from the first flow path section 300a, and the dust, and the like is filtered, and the vent gas moves to the second flow path section 300b, which is the direction in which the primary filter 500 is opened. At this time, even if the primary filter 500 is clogged (even if the filtering function is almost lost) due to the continued filtering in the primary filter 500, the second flow path section 300b has an open shape due to the structure of the primary filter 500, which makes it possible to avoid a situation where the primary filter 500 clogged with dust blocks the flow path 300.

Fig. 11 exemplarily shows a case where the primary filter 500 has a U-shaped cross section. In some cases, a portion of the primary filter 500 except the upper end and the lower end may be bonded to the second support member 532.

Further, Fig. 11 shows a case in which a plurality of primary filters 500 each having a U-shaped cross section are provided in the up and down direction. That is, a plurality of primary filters 500-1 and 500-2 may be provided along a direction perpendicular to each of the extending directions of the first flow path section 300a and the extending direction of the second flow path section 300b. At this time, both ends of each of the plurality of primary filters 500-1 and 500-2 may be connected to each other.

For example, not only the upper and lower ends of the primary filter 500 but also the central part may be supported by the first support member 531. Accordingly, a plurality of U-shaped primary filters 500 are provided in the extending direction (for example, in the up and down direction) of the second support member 532, exemplarily showing a case where the primary filter 500 has a "3" shape as a whole. On the other hand, the present disclosure is not limited to those illustrated, and various modifications and changes can be made, such as providing three or more primary filters 500 having a U-shaped or V-shaped concave shape. On the other hand, although not specifically mentioned above, the battery pack according to one embodiment of the present disclosure may further include a battery management system (BMS) and/or a cooling device that controls and manages battery's temperature, voltage, etc.

The battery pack according to one embodiment of the present disclosure can be applied to various devices. For example, the device to which the battery pack is applied may be a vehicle means such as an electric bicycle, an electric vehicle, or a hybrid vehicle, but the above-mentioned device is not limited thereto, and the battery pack according to the present embodiment can be used for various devices in addition to the above illustrations, which also falls within the scope of the present disclosure.

### [Description of Reference Numerals]

1000: battery pack
100: battery module
130: opening part
200: pack frame
210: outlet port
300: vent flow path
300a: first flow path section
300b: second flow path section
400: final filter
500, 500': primary filter
500-1, 500-2, ... , 500-k, ... , 500-n: primary filter
500a: first surface
500b: second surface
510: bent part
520: opening part
530: support unit
531: first support member
532: second support member

## Claims

1. A battery pack (1000) comprising:
at least one battery module (100) including a plurality of battery cell stacks;
a pack frame (200) that houses the battery module (100);
a vent flow path (300) through which gas containing dust generated from the battery module (100) moves; and
a final filter (400) that filters the dust before the gas containing the dust is discharged to the outside of the battery pack (1000),
wherein the battery pack (1000) further comprises a primary filter (500) that is provided in the vent flow path (300) at a point where the flow path direction of the vent flow path (300) changes, and primarily filters the dust before the final filter (400), **characterised in that** the primary filter (500) is arranged apart from the inner surface of the vent flow path (300).

2. The battery pack (1000) according to claim 1, wherein:
a first surface of the primary filter (500) faces a first flow path through which the gas flows into the primary filter (500), and a second surface of the primary filter (500) faces a second flow path through which the gas flows out of the primary filter (500).

3. The battery pack (1000) according to claim 2, wherein:
the orientation of the first surface of the primary filter (500) is parallel to the direction of the first flow path through which the gas flows into the primary filter (500), and
the orientation of the second surface of the primary filter (500) is parallel to the direction of the second flow path through which the gas flows out of the primary filter (500).

4. The battery pack (1000) according to claim 1, wherein:
the primary filter (500') comprises at least one plate-shaped filter (500-1, 500-2, 500-k, ... 500-n),
the flat surface of the plate-shaped filter (500-1, 500-2, 500-k, ... 500-n) faces a first flow path through which the gas flows into the primary filter (500'), and
an edge part of the plate-shaped filter (500-1, 500-2, 500-k, ... 500-n) faces a second flow path through which the gas flows out of the primary filter (500').

5. The battery pack (1000) according to claim 4, wherein:
the primary filter (500') comprises a plurality of plate-shaped filters (500-1, 500-2, 500-k, ... 500-n) arranged in parallel.

6. The battery pack (1000) according to claim 5, wherein:
the first filter (500-1) arranged closest to the first flow path is in a most loosening non-dense state, and the plurality of plate-shaped filters (500-1, 500-2, 500-k, ... 500-n) consist of filters that become gradually dense in the order in which they are arranged.

7. The battery pack (1000) according to claim 5, wherein:
the primary filter (500') comprises 'n' number of filters (500-1, 500-2, 500-k, ... 500-n) arranged in parallel, and
the first filter (500-1) closest to the first flow path is coarsest, and the kth filter (500-k) is denser than the k-1st filter (500-k-1), wherein k is a natural number from 1 to n.

8. The battery pack (1000) according to claim 1, wherein:
the primary filter (500) consists of a mesh structure or is a resin filter having a porous structure.

9. The battery pack (1000) according to claim 8, wherein:
the primary filter (500) consists of a wavy mesh structure, and the dust is filtered at the wavy bent part.

10. The battery pack (1000) according to claim 1, wherein:
the vent flow path (300) is integrated into the interior of the pack frame (200), and
the primary filter (500) is provided at a corner part of the pack frame (200).

11. The battery pack (1000) according to claim 1, wherein:
the primary filter (500):
has a concave structure between both ends, in which both ends protrude toward the first flow path through which the gas flows into the primary filter (500), and
has an open structure when viewed from the second flow path through which the gas flows out of the primary filter (500).

12. The battery pack (1000) according to claim 11, wherein:
the primary filter (500) has a U-shaped or V-shaped cross section when viewed from the second flow path.

13. The battery pack (1000) according to claim 11, wherein:
the primary filter (500-1, 500-2) is provided in plural numbers along a direction perpendicular to each of the first flow path and the second flow path.

14. The battery pack (1000) according to claim 11, further comprising:
a first support member (531) that protrudes toward the first flow path so as to support at least both ends of the primary filter (500).

15. The battery pack (1000) according to claim 14, further comprising:
a second support member (532) that connects the first support members (531) provided in at least both ends of the primary filter (500).

16. A device comprising at least one battery pack (1000) according to claim 1.

## Patentansprüche

1. Batteriepack (1000), umfassend:
wenigstens ein Batteriemodul (100), welches eine Mehrzahl von Batteriezellenstapeln umfasst;
einen Packrahmen (200), welcher das Batteriemodul (100) aufnimmt;
einen Entlüftungsströmungspfad (300), durch welchen sich Gas bewegt, welches von dem Batteriemodul (100) generierten Staub beinhaltet; und
einen Endfilter (400), welcher den Staub filtert, bevor das Gas, welches den Staub beinhaltet, zu dem Äußeren des Batteriepacks (1000) abgeführt wird,
wobei der Batteriepack (1000) ferner einen primären Filter (500) umfasst, welcher in dem Entlüftungsströmungspfad (300) an einem Punkt bereitgestellt ist, an welchem sich die Strömungspfadrichtung des Entlüftungsströmungspfads (300) ändert, und den Staub vor dem Endfilter (400) primär filtert,
**dadurch gekennzeichnet, dass** der primäre Filter (500) von der Innenfläche des Entlüftungsströmungspfads (300) beabstandet angeordnet ist.

2. Batteriepack (1000) nach Anspruch 1, wobei:
eine erste Fläche des primären Filters (500) einem ersten Strömungspfad zugewandt ist, durch welchen das Gas in den primären Filter (500) strömt, und eine zweite Fläche des primären Filters (500) einem zweiten Strömungspfad zugewandt ist, durch welchen das Gas aus dem primären Filter (500) herausströmt.

3. Batteriepack (1000) nach Anspruch 2, wobei
die Orientierung der ersten Fläche des primären Filters (500) parallel zu der Richtung des ersten Strömungspfads ist, durch welchen das Gas in den primären Filter (500) strömt, und
die Orientierung der zweiten Fläche des primären Filters (500) parallel zu der Richtung des zweiten Strömungspfads ist, durch welchen das Gas aus dem primären Filter (500) herausströmt.

4. Batteriepack (1000) nach Anspruch 1, wobei:
der primäre Filter (500') wenigstens einen plattenförmigen Filter (500-1, 500-2, 500-k, ... 500-n) umfasst,
wobei die flache Fläche des plattenförmigen Filters (500-1, 500-2, 500-k, ... 500-n) einem ersten Strömungspfad zugewandt ist, durch welchen das Gas in den primären Filter (500') strömt, und
ein Randteil des plattenförmigen Filters (500-1, 500-2, 500-k, ... 500-n) einem zweiten Strömungspfad zugewandt ist, durch welchen das Gas aus dem primären Filter (500') herausströmt.

5. Batteriepack (1000) nach Anspruch 4, wobei:
der primäre Filter (500') eine Mehrzahl plattenförmiger Filter (500-1, 500-2, 500-k, ... 500-n) umfasst, welche parallel angeordnet sind.

6. Batteriepack (1000) nach Anspruch 5, wobei:
der erste Filter (500-1), welcher am nächsten zu dem ersten Strömungspfad angeordnet ist, in einem am lockersten, nicht dichten Zustand ist, und die Mehrzahl plattenförmiger Filter (500-1, 500-2, 500-k, ... 500-n) aus Filtern besteht, welche in der Reihenfolge, in welcher sie angeordnet sind, allmählich dicht werden.

7. Batteriepack (1000) nach Anspruch 5, wobei:
der primäre Filter (500') eine Anzahl "n" von Filtern (500-1, 500-2, 500-k, ... 500-n) umfasst, welche parallel angeordnet sind, und
der erste Filter (500-1), welcher dem ersten Strömungspfad am nächsten ist, am gröbsten ist, und der k-te Filter (500-k) dichter als der (k-1)-te Filter (500-k-1) ist, wobei k eine natürliche Zahl von 1 bis n ist.

8. Batteriepack (1000) nach Anspruch 1, wobei:
der primäre Filter (500) aus einer Maschenstruktur besteht oder ein Harzfilter ist, welcher eine poröse Struktur aufweist.

9. Batteriepack (1000) nach Anspruch 8, wobei:
der primäre Filter (500) aus einer wellenförmigen Maschenstruktur besteht und der Staub an dem wellenförmig gebogenen Teil gefiltert wird.

10. Batteriepack (1000) nach Anspruch 1, wobei:
der Entlüftungsströmungspfad (300) in dem Inneren des Packrahmens (200) integriert ist, und
der primäre Filter (500) an einem Eckteil des Packrahmens (200) bereitgestellt ist.

11. Batteriepack (1000) nach Anspruch 1, wobei:
der primäre Filter (500):
eine konkave Struktur zwischen beiden Enden aufweist, in welcher beide Enden in Richtung des ersten Strömungspfads vorstehen, durch welchen das Gas in den primären Filter (500) strömt, und
eine offene Struktur aufweist, wenn er von dem zweiten Strömungspfad aus betrachtet wird, durch welchen das Gas aus dem primären Filter (500) herausströmt.

12. Batteriepack (1000) nach Anspruch 11, wobei
der primäre Filter (500) einen U-förmigen oder V-förmigen Querschnitt aufweist, wenn er von dem zweiten Strömungspfad aus betrachtet wird.

13. Batteriepack (1000) nach Anspruch 11, wobei:
der primäre Filter (500-1, 500-2) in einer Mehrzahl entlang einer Richtung senkrecht zu jedem aus dem ersten Strömungspfad und dem zweiten Strömungspfad bereitgestellt ist.

14. Batteriepack (1000) nach Anspruch 11, ferner umfassend:
ein erstes Halterungselement (531), welches In Richtung des ersten Strömungspfads vorsteht, um wenigstens beide Enden des primären Filters (500) zu haltern.

15. Batteriepack (1000) nach Anspruch 14, ferner umfassend:
ein zweites Halterungselement (532), welches die ersten Halterungselemente (531) verbindet, welche an wenigstens beiden Enden des primären Filters (500) bereitgestellt sind.

16. Vorrichtung, welche wenigstens einen Batteriepack (1000) nach Anspruch 1 umfasst.

## Revendications

1. Bloc-batterie (1000) comprenant :
au moins un module de batterie (100) comportant une pluralité d'éléments de batterie ;
un châssis de bloc (200) qui abrite le module de batterie (100) ;
un trajet d'écoulement d'évent (300) à travers lequel circule du gaz contenant de la poussière généré par le module de batterie (100) ; et
un filtre final (400) qui filtre la poussière avant que le gaz contenant la poussière ne soit évacué à l'extérieur du bloc-batterie (1000),
dans lequel le bloc-batterie (1000) comprend en outre un filtre primaire (500) qui est disposé dans le trajet d'écoulement d'évent (300) à un endroit où la direction de trajet d'écoulement du trajet d'écoulement d'évent (300) change, et filtre principalement la poussière avant le filtre final (400), **caractérisé en ce que** le filtre primaire (500) est agencé à l'écart de la surface interne du trajet d'écoulement d'évent (300).

2. Bloc-batterie (1000) selon la revendication 1, dans lequel :
une première surface du filtre primaire (500) fait face à un premier trajet d'écoulement à travers lequel le gaz s'écoule dans le filtre primaire (500), et une deuxième surface du filtre primaire (500) fait face à un deuxième trajet d'écoulement à travers lequel le gaz s'écoule du filtre primaire (500).

3. Bloc-batterie (1000) selon la revendication 2, dans lequel :
l'orientation de la première surface du filtre primaire (500) est parallèle à la direction du premier trajet d'écoulement à travers lequel le gaz s'écoule dans le filtre primaire (500), et
l'orientation de la deuxième surface du filtre primaire (500) est parallèle à la direction du deuxième trajet d'écoulement à travers lequel le gaz s'écoule du filtre primaire (500).

4. Bloc-batterie (1000) selon la revendication 1, dans lequel :
le filtre primaire (500') comprend au moins un filtre en forme de plaque (500-1, 500-2, 500-k, ... 500-n),
la surface plane du filtre en forme de plaque (500-1, 500-2, 500-k, ... 500-n) fait face à un premier trajet d'écoulement à travers lequel le gaz s'écoule dans le filtre primaire (500'), et
une partie de bord du filtre en forme de plaque (500-1, 500-2, 500-k, ... 500-n) fait face à un deuxième trajet d'écoulement à travers lequel le gaz s'écoule du filtre primaire (500').

5. Bloc-batterie (1000) selon la revendication 4, dans lequel :
le filtre primaire (500') comprend une pluralité de filtres en forme de plaque (500-1, 500-2, 500-k, ... 500-n) agencés en parallèle.

6. Bloc-batterie (1000) selon la revendication 5, dans lequel :
le premier filtre (500-1) agencé le plus près du premier trajet d'écoulement est dans un état non dense le plus desserré, et la pluralité de filtres en forme de plaque (500-1, 500-2, 500-k, ... 500-n) sont constitués de filtres qui deviennent progressivement denses dans l'ordre dans lequel ils sont agencés.

7. Bloc-batterie (1000) selon la revendication 5, dans lequel :
le filtre primaire (500') comprend un nombre « n » de filtres (500-1, 500-2, 500-k, ... 500-n) agencés en parallèle, et
le premier filtre (500-1) le plus proche du premier trajet d'écoulement est le plus grossier, et le kème filtre (500-k) est plus dense que le k-1ème filtre (500-k-1), dans lequel k est un nombre naturel de 1 à n.

8. Bloc-batterie (1000) selon la revendication 1, dans lequel :
le filtre primaire (500) est constitué d'une structure maillée ou est un filtre en résine présentant une structure poreuse.

9. Bloc-batterie (1000) selon la revendication 8, dans lequel :
le filtre primaire (500) est constitué d'une structure maillée ondulée, et la poussière est filtrée au niveau de la partie courbée ondulée.

10. Bloc-batterie (1000) selon la revendication 1, dans lequel :
le trajet d'écoulement d'évent (300) est intégré à l'intérieur du châssis de bloc (200), et
le filtre primaire (500) est disposé au niveau d'une partie d'angle du châssis de bloc (200).

11. Bloc-batterie (1000) selon la revendication 1, dans lequel :
le filtre primaire (500) :
présente une structure concave entre les deux extrémités, dans laquelle les deux extrémités font saillie vers le premier trajet d'écoulement à travers lequel le gaz s'écoule dans le filtre primaire (500), et
présente une structure ouverte lorsqu'il est vu depuis le deuxième trajet d'écoulement à travers lequel le gaz s'écoule du filtre primaire (500).

12. Bloc-batterie (1000) selon la revendication 11, dans lequel :
le filtre primaire (500) présente une section transversale en forme de U ou de V lorsqu'il est vu depuis le deuxième trajet d'écoulement.

13. Bloc-batterie (1000) selon la revendication 11, dans lequel :
le filtre primaire (500-1, 500-2) est prévu en plusieurs exemplaires le long d'une direction perpendiculaire à chacun du premier trajet d'écoulement et du deuxième trajet d'écoulement.

14. Bloc-batterie (1000) selon la revendication 11, comprenant en outre :
un premier élément de support (531) qui fait saillie vers le premier trajet d'écoulement de manière à supporter au moins les deux extrémités du filtre primaire (500).

15. Bloc-batterie (1000) selon la revendication 14, comprenant en outre :
un deuxième élément de support (532) qui relie les premiers éléments de support (531) disposés au moins dans les deux extrémités du filtre primaire (500).

16. Dispositif comprenant au moins un bloc-batterie (1000) selon la revendication 1.
